(19) Europäisches Patentamt
European Patent Office
Office européen des brevets

(11) EP 0 688 349 B1

(12) **FASCICULE DE BREVET EUROPEEN**

(45) Date de publication et mention de la délivrance du brevet:
**02.05.1997 Bulletin 1997/18**

(21) Numéro de dépôt: **94909155.7**

(22) Date de dépôt: **07.03.1994**

(51) Int Cl.[6]: **C08J 7/04**, C08K 5/00, C09D 183/06

(86) Numéro de dépôt international:
**PCT/FR94/00246**

(87) Numéro de publication internationale:
**WO 94/20581 (15.09.1994 Gazette 1994/21)**

(54) **COMPOSITIONS POLYSILOXANES THERMODURCISSABLES POUR REVETEMENT ANTIABRASION, LEUR PROCEDE D'OBTENTION ET ARTICLES REVETUS CORRESPONDANTS, NOTAMMENT OPHTALMIQUES**

ABRIEBFESTE THERMOHÄRTENDE POLYSILOXANBESCHICHTUNGS-ZUSAMMENSETZUNGEN, VERFAHREN ZU DEREN HERSTELLUNG UND BESCHICHTETE GEGENSTÄNDE, INSBESONDERE KONTAKTLINSEN

THERMOSETTING POLYSILOXANE COMPOSITIONS FOR ANTI-ABRASION COATING, PROCESS FOR THEIR PRODUCTION AND CORRESPONDING COATED ARTICLES, ESPECIALLY OPHTHALMIC GLASSES AND LENSES

(84) Etats contractants désignés:
**AT BE CH DE DK ES FR GB GR IE IT LI NL PT SE**

(30) Priorité: **08.03.1993 FR 9302650**

(43) Date de publication de la demande:
**27.12.1995 Bulletin 1995/52**

(73) Titulaire: **ESSILOR INTERNATIONAL (Compagnie Générale d'Optique)
F-94220 Charenton-le-Pont (FR)**

(72) Inventeur: **LECLAIRE, Yves
F-77380 Combs-la-Ville (FR)**

(74) Mandataire: **Casalonga, Axel et al
BUREAU D.A. CASALONGA - JOSSE
Morassistrasse 8
80469 München (DE)**

(56) Documents cités:
**EP-A- 0 035 609**
**FR-A- 2 383 220**
**US-A- 4 355 135**

- **DATABASE WPI Derwent Publications Ltd., London, GB; AN 92-101607 & JP,A,4 045 129 (DAIHACHI KAGAKU KOG KK.) 14 Février 1992**
- **DATABASE WPI Derwent Publications Ltd., London, GB; AN 90-235401 & JP,A,2 163 178 (SHINETSU CHEM IND KK.) 22 Juin 1990**
- **DATABASE WPI Derwent Publications Ltd., London, GB; AN 92-101607 & JP,A,4 045 129**
- **DATABASE WPI Derwent Publications Ltd., London, GB; AN 90-235401 & JP,A,2 163 178**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

EP 0 688 349 B1

## Description

La présente invention se rapporte au domaine des compositions polysiloxanes thermodurcissables, plus particulièrement celles obtenues par hydrolyse et prepolymérisation d'alkoxysilanes organofonctionnels et qui sont susceptibles d'être utilisées pour revêtir et protéger contre l'abrasion des articles en matériau organique, en particulier des lentilles ophtalmiques.

Les lentilles ophtalmiques en matériau organique transparent (ou verre organique), plus léger que le verre minéral, sont maintenant d'un usage très répandu.

Les verres organiques possèdent cependant l'inconvénient d'être plus sensibles à la rayure et à l'abrasion que ne le sont les verres minéraux classiques. Cette tendance est encore plus marquée pour les verres organiques d'indice de réfraction élevé (polycarbonate, polythiouréthannes) plus récemment apparus dans le domaine de l'optique ophtalmique.

Il a été proposé, pour améliorer la résistance à l'abrasion et à la rayure des verres organiques de protéger leur surface par application sur celle-ci d'une composition durcissable par voie thermique ou photochimique conduisant à un revêtement présentant les propriétés recherchées.

Le revêtement obtenu doit alors respecter au mieux un certain nombre de critères, outre les propriétés de résistance à l'abrasion et à la rayure.

Il doit posséder la transparence requise pour application au domaine optique. Il ne doit pas diffuser la lumière ni présenter de craquelures.

Son adhérence au substrat que constitue la lentille doit être bonne.

Il doit, de préférence, être teintable dans les bains de coloration utilisés pour traiter le verre organique nu.

Il est en outre important que les compositions durcissables possèdent des propriétés stables dans le temps.

En particulier, il est souhaitable que ces compositions possèdent une viscosité constante (celle-ci conditionnant leur mise en oeuvre) et qu'elles permettent d'obtenir des revêtements présentant des caractéristiques identiques pendant toute la durée d'utilisation de ces dites compositions.

Plusieurs techniques ont été explorées pour tenter de fournir des compositions et des revêtements respectant des critères.

Une technique connue pour former des revêtements consiste à polymériser des alkoxysilanes en présence de dérivés de l'aluminium.

Le brevet US 4042749 décrit des articles porteurs d'un revêtement résistant à l'abrasion obtenu par réaction entre un silane réactif contenant un groupe vinylique, méthacrylique ou époxy et un ester métallique de formule M(OR)x où M représente Ti, Al ou Zr et où R est un radical alkyle de 1 à 8 atomes de carbone, x représentant la valence du métal.

De telles compositions n'ont pas donné entière satisfaction, en particulier sur le plan de la résistance à l'abrasion.

D'autres techniques mettent en oeuvre des hydrolysats d'époxysilanes associés à des charges, par exemple de silice.

Ainsi, le brevet US 4211823 décrit des compositions de revêtement renfermant :

- un hydrolysat d'un silane possèdant un groupe époxy et pas moins de deux groupes alkoxy directement reliés à l'atome de silicium,
- de fines particules de silice,
- certains chélates d'aluminium,

dans un milieu solvant renfermant plus de 1 % en poids d'eau.

Les revêtements obtenus selon le brevet US 4211823 ne présentent pas une bonne colorabilité et ne permettent pas d'allier colorabilité et résistance élevée à l'abrasion.

La présente invention remédie aux inconvenients de l'art antérieur en utilisant d'autres catalyseurs que les chélates d'aluminium utilisés dans le brevet US 4211823.

Une composition de revêtement selon l'invention comprend les constituants suivants :

A- Un hydrolysat d'un époxysilane comportant de 2 à 3 groupements alkoxy directement reliés à l'atome de silicium,
B - de la silice colloïdale,
C - un composé de l'aluminium,

la dite composition renfermant au moins 1 % en poids d'eau, et est caractérisée en ce que le composé de l'aluminium est choisi parmi les composés correspondant à l'une des formules (I) ou (II)

$$(I) \qquad Al(O\underset{\underset{O}{\parallel}}{C}R)_n\,(OR')_{3-n}$$

$$(II) \qquad (R'O)_{3-n}\,Al(O\,SiR''_3)_n$$

dans lesquelles

R et R' sont des groupements alkyles à chaîne linéaire ou ramifiée de 1 à 10 atomes de carbone,
R" est un groupement alkyle à chaîne linéaire ou ramifiée de 1 à 10 atomes de carbone, un groupement phényle, un groupement

$$-O\underset{\underset{O}{\parallel}}{C}R$$

où R a la signification donnée ci-dessus,
n est un nombre entier de 1 à 3.

Lorsque le composé de formule (I) comporte plusieurs groupements R, ceux-ci peuvent être identiques ou différents entre eux.

Ceci s'applique également pour les groupements R' s'il existe plusieurs groupements R' dans les composés de formules (I) et (II) et pour les groupements R" s'il existe plusieurs groupements R" dans le composé de formule (II).

Préférentiellement, dans les composés de formule (I) ou (II), les groupements R sont identiques entre eux, les groupements R' sont identiques entre eux, de même que les groupements R".

Le constituant A de la composition est préférentiellement un hydrolysat d'un époxysilane correspondant à la formule (III):

$$(III) \qquad (R^1O)_m\underset{\underset{R^2_{3-m}}{|}}{Si} - (CH_2)_a - (OCH_2CH_2)_b - OCH_2 - \overset{\overset{R^3}{|}}{C} - CH_2 \quad (\text{C}\backslash\,O\,/\text{CH}_2)$$

dans laquelle:

$R^1$ est un groupement alkyle de 1 à 6 atomes de carbone, préférentiellement un groupement méthyle ou éthyle.
$R^2$ est un groupement alkyle de 1 à 6 atomes de carbone ou un groupement aryle,
$R^3$ est un groupement méthyle ou un atome d'hydrogène,
m représente 2 ou 3,
a est un nombre entier de 1 à 6,
b représente 0, 1 ou 2.

Des exemples de tels époxysilanes sont le γ-glycidoxypropyl triméthoxysilane, le γ-glycidoxypropryltriéthoxysilane, le γ-glycidoxypropylméthyldiméthoxysilane, le γ-glycidoxypropylméthyl diéthoxysilane, et le γ-glycidoxyéthoxypropyl methyldiméthoxysilane.

Parmi les époxysilanes de formule (III), on utilise préférentiellement ceux qui comportent 3 groupements alkoxy directement reliés à l'atome de silicium, et en particulier le γ-glycidoxypropyltriméthoxysilane.

Les époxysilanes porteurs de trois groupements alkoxy conduisent, dans les compositions selon l'invention, à un haut degré de réticulation pour le polymère final constituant le revêtement et donc à un haut degré de résistance à l'abrasion.

Préférentiellement, les compositions selon l'invention renferment en-outre D) un hydrolysat d'un alkoxysilane correspondant à la formule (IV)

(IV) $R^6 R^7 Si (OR^4) (OR^5)$

dans laquelle

$R^4$ et $R^5$ sont des groupements alkyles, à chaîne linéaire ou ramifiée, de 1 à 10 atomes de carbone,
$R^6$ et $R^7$ sont choisis parmi les groupements alkyles à chaîne linéaire ou ramifiée, possédant de 1 à 10 atomes de carbone et les groupements phényles.

Des exemples de tels alkoxysilanes sont le diméthyldiméthoxysilane, le diméthyldiéthoxysilane, le méthylphényldiméthoxysilane.

Les hydrolysats des silanes de formule (III) et (IV) sont préparés de façon connue en soi.

Les techniques exposées dans le brevet US 4211823 peuvent être utilisées.

Lorsque les deux silanes de formule (III) et (IV) sont utilisés, on peut, par exemple, les melanger et effectuer ensuite l'hydrolyse du mélange.

On préfère utiliser une quantité d'eau stoechiométrique, c'est-à-dire une quantité molaire en eau correspondant au nombre de moles de fonctions hydrolysables Si - O - Alkyle, des silanes (III) et (IV).

Le constituant B de la composition est de la silice colloïdale, c'est-à-dire de fines particules de silice de l'ordre de 1 à 100 mμ de diamètre, en dispersion dans un solvant, préférentiellement alcoolique.

Le constituant C qui est un composé de l'aluminium correspondant à la formule

(I) 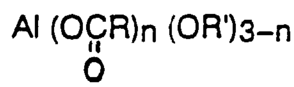

ou

(II) $(R'O)_{3-n} Al (O Si R"_3)_n$

dans lesquelles R, R' et R" et n ont la signification indiquée précédemment, est essentiel pour l'obtention des résultats avantageux de l'invention.

Ces composés sont des catalyseurs de durcissement de la composition de revêtement.

Ils sont moins actifs que les chélates d'aluminium du brevet US 4211823 et permettent d'obtenir une bonne colorabilité des lentilles revêtues selon l'invention.

On préfère utiliser les constituants C pour lesquels R' est un groupement isopropyle ou éthyle, R et R" sont des groupements méthyle.

Les proportions des constituants A, B, C et D dans la composition sont choisis de façon à conduire à un extrait sec théorique de cette composition renfermant

- de 30 à 80 % en poids, de préférence de 40 à 50 % en poids de matières solides provenant du constituant A,
- de 0 à 20 % en poids, de préférence de 5 à 15 % en poids, de matières solides provenant du constituant D,
- de 20 à 60 % en poids, de préférence de 35 à 50 % en poids, de matières solides provenant du constituant B,
- de 0,5 à 5 %, de préférence de 1 à 2 % en poids du constituant C.

Par poids en matières solides provenant du constituant A ou du constituant D, on entend le poids calculé en unités Qk Si $O_{(4-k)/2}$ dans lesquelles Q est un groupement organique directement relié à l'atome de silicium par une liaison Si-C et $Q_k$ Si $O_{(4-k)/2}$ provient de Qk $Si(OX)_{4-k}$ où X est un groupement alkyle, k représente 0, 1 ou 2.

Par poids en matières solides provenant du constituant B, on entend le poids en $SiO_2$.

Le poids en extrait sec théorique est le poids total calculé de matières solides provenant des constituants A, B, et D, additionné du poids du constituant C.

Les compositions selon l'invention comprennent en outre au moins 1 % en poids d'eau.

Cette eau peut provenir d'une hydrolyse incomplète des silanes de départ ou de la réaction de condensation des silanols formés au cours de cette hydrolyse.

L'eau peut encore être ajoutée aux compositions, soit directement, soit par l'intermédiaire de solvants organiques qui contiennent eux-mêmes un certain pourcentage d'eau.

Les compositions peuvent aussi inclure divers additifs tels que des agents tensio-actifs favorisant un meilleur

étalement de la composition sur la surface à revêtir, des absorbeurs UV, ou des pigments.

La présente invention a également pour objet un procédé de préparation des compositions précédemment décrites, procédé selon lequel le constituant C ou catalyseur est préparé préalablement à son utilisation à partir de composés de formule (V) $Al(OR')_3$ où R' est un groupement alkyle à chaîne linéaire ou ramifiée de 1 à 10 atomes de carbone.

Les composés de formule (V) sont en effet aisément disponibles dans le commerce, et à des coûts peu élevés.

Le composé de formule (V) est mis à réagir avec, soit un acide de formule (VI) RCOOH, soit un composé de formule

(VII) 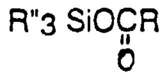

R, R" ont la même signification que dans les formules (I) et (II) données pour les constituants C.

Les proportions molaires utilisées en composés (VI) ou (VII) par rapport au composé (V) varient de 1 à 3.

Cette étape de préparation du catalyseur est effectuée preférentiellement en milieu solvant organique, tel que le toluène.

Le catalyseur obtenu peut être ensuite directement ajouté à hydrolysat de silanes, éventuellement chargé en silice $SiO_2$.

Il n'est pas nécessaire d'isoler le catalyseur qui peut être utilisé dans son milieu solvant.

Les articles revêtus selon l'invention sont des articles en matériau organique, plus particulièrement ceux utilisés dans le domaine de l'optique ophtalmique et spécialement en matériau organique obtenu par polymérisation du di (allylcarbonate) de diéthylène glycol ou du di(allylcarbonate) de bis phénol A.

En ce qui concerne la mise en oeuvre, les compositions peuvent être appliquées par toute technique appropriée et connue en soi (trempé, centrifugation, notamment).

Elles sont ensuite durcies thermiquement dans une gamme de température variant de 60°C à 150°C.

Les exemples suivants illustrent l'invention de façon plus détaillée mais non limitative.

Pour l'appréciation des propriétés des verres revêtus obtenus dans les exemples on a mesuré :

- la résistance à l'abrasion, par la valeur obtenue au test BAYER pratiqué conformément à la norme ASTM F735.81.
  Une valeur élevée au test BAYER correspond à un degré élevé de résistance à l'abrasion.
- La résistance à la rayure par le test à la laine d'acier.
  On utilise de la laine d'acier extra fine n° 000 STARWAX.
  Avec un morceau de laine d'acier d'environ 3 cm sur 3 cm plié sur lui-même, on effectue 10 aller-retours en frottant le verre revêtu dans le sens des fibres avec une pression constante lors de cette opération.
  Le verre est ensuite essuyé avec un chiffon sec, puis rincé à l'alcool.
  On apprécie ensuite visuellement l'état du verre et l'on attribue une notation en fonction de la graduation suivante :

  0 aucune rayure observée
  1 verre très peu rayé (0 à 5 rayures)
  2 verre peu rayé (jusqu'à 20 rayures)
  3 verre assez rayé (jusqu'à 50 rayures)
  4 verre très rayé (nombre de rayures supérieur à 50)
  5 substrat nu (ORMA®).

- L'écart colorimétrique
  L'écart colorimétrique est la différence entre le taux de transmission Tv (test) du verre revêtu coloré et le taux de transmission Tv (témoin) du verre témoin (substrat nu) coloré dans les mêmes conditions.

$$EC = Tv\ (test) - Tv\ (témoin)$$

  Plus cet écart est faible, meilleure est la coloration.
  Dans le cas d'un témoin en polymère de di(allylcarbonate) de diéthylène glycol le verre revêtu est incolorable pour une valeur EC = 50.
  Les verres sont colorés dans des conditions classiques, par trempage dans des bains aqueux à 94°C renfermant des pigments dispersés.
- L'aspect du verre revêtu, effectué par contrôle visuel.

**Exemple 1**

A 176,7 g de γ-glycidoxypropyltriméthoxysilane, on ajoute goutte à goutte sous agitation 40,4 g d'une solution aqueuse d'acide chlorhydrique 0,1 N.

On poursuit l'agitation du mélange pendant 24 heures après hydrolyse.

On ajoute ensuite 416,7 g de silice colloïdale NISSAN Sun Colloïd MAST. (teneur en $SiO_2$ de 30 % en poids dans le méthanol), et ensuite 0,8 g de tensioactif Fc 430.

Le catalyseur est préparé en dissolvant 3,6 g d'isopropoxyde d'aluminium $Al(OiPr)_3$ dans 30 g de toluène et en ajoutant 1,1 g d'acide acétique à ce mélange toluénique. On réalise ainsi la substitution d'un seul groupement isopropoxyde par un groupement acétoxy pour obtenir un composé de formule (I) donnée précédemment dans laquelleR=$CH_3$ R'=isopropyle et n=1.

On ajoute ensuite ce mélange toluénique à l'hydrolysat chargé en silice obtenu précédemment.

La composition obtenue est ensuite laissée vieillir pendant 3 semaines (21 jours).

La composition vieillie est appliquée sur une lentille ophtalmique ORMA®, en verre organique constitué d'un polymère de di(allylcarbonate) de diéthylène glycol puis est durcie à une température de 100°C pendant 3 heures.

On mesure ensuite les propriétés du verre revêtu :

- valeur obtenue au test BAYER : 3
- Note au test à la laine d'acier : 1
- Ecart colorimétrique : + 39,7
- aspect visuel : bon
- Epaisseur du vernis : 3,32 μ

**Exemple 2**

On mélange 162.5 g de γ-glycidoxypropyltriméthoxysilane et 85 g de diméthyldiéthoxysilane.

On ajoute ensuite goutte à goutte et sous agitation 57,7 g d'une solution aqueuse d'acide chlorydrique 0.1 N.

On poursuit l'agitation du mélange pendant 24 heures après hydrolyse.

On ajoute ensuite 525 g de silice colloïdale NISSAN Sun Colloïd MAST, et ensuite 0,9 g de tensio-actif FC430.

Le catalyseur est préparé en dissolvant 3,4 g d'isopropoxyde d'aluminium $(AlOiPr)_3$ dans 30 g de toluène et en ajoutant 1 g d'acide acétique.

Lorsque la viscosité de la solution toluénique commence à augmenter, on l'ajoute à l'hydrolysat chargé en silice obtenu précédemment pour obtenir la composition de revêtement.

On prélève deux échantillons de cette composition, le premier est utilisé immédiatement pour revêtir une lentille ophtalmique ORMA®. Le second est laissé 21 jours à vieillir avant d'être utilisé pour revêtir une lentille analogue.

Les conditions de durcissement sont les mêmes dans les deux cas et identiques à celles de l'exemple 1.

On mesure ensuite les propriétés des verres revêtus :

| | Echantillon 1 (T = O j) | Echantillon 2 (T = 21 j) |
|---|---|---|
| BAYER | 2 | 2 |
| laine d'acier | 1,5 | 1,5 |
| Ecart colorimétrique | + 16,4 | + 16,7 |
| Aspect visuel | bon | bon |
| Epaisseur | 3,32 μ | 3,17 μ |

On constate que le vieillissement des compositions ne modifie pas les propriétés des revètements obtenus.

**Exemple 3**

On mélange 325 g de γ-glycidoxypropylthriméthoxysilane et 170,1g de diméthyldiéthoxysilane.

On ajoute ensuite goutte à goutte et sous agitation 115,5 g d'une solution d'acide chlorhydrique 0,1 N.

On poursuit l'agitation du mélange pendant 24 heures après hydrolyse.

On ajoute ensuite 1050 g de silice coiloïdale NISSAN Sun Colloïd MAST, puis 64,1 g de méthyléthylcétone et 0,9 g de tensio actif FC430.

Le catalyseur est préparé en dissolvant 5,28 g d'éthoxyde d'aluminium $Al(OEt)_3$ dans 20 g de toluène et en ajoutant

1,96 g d'acide acétique.

On réalise ainsi la substitution d'un seul groupement éthoxy par un groupement acetoxy pour obtenir un composé de formule (I) dans laquelle R=$CH_3$, R'=éthyle et n = 1.

On ajoute alors ce catalyseur en solution dans l'hydrolysat chargé en silice préparé précédemment. On ne note pas d'évolution de la viscosité ou d'apparition de gel.

La composition obtenue est appliquée sur une lentille ophtalmique ORMA®, puis durcie, dans les conditions de l'exemple 1.

On mesure ensuite les propriétés des verres revêtus :

| | |
|---|---|
| BAYER | 2,7 |
| Laine d'acier | 1 |
| Ecart colorimétrique | + 17,1 |
| Aspect visuel | bon |
| Epaisseur | 3,7 µ |

**Exemple 4**

On prépare, selon le mode opératoire de l'exemple 2, un mélange renfermant un hydrolysat de γ-glycidoxypropyltriméthoxysilane et de diméthydiéthoxysilane ainsi que de la silice colloïdale.

On prépare un catalyseur C répondant à la formule (II) donnée précédemment dans laquelle R' = isopropyle et R" = $CH_3$ en dissolvant 3,40 g d'isopropoxyde d'aluminium dans 30 g de toluène et en ajoutant 2,2 g de triméthylacetoxysilane.

Le catalyseur ainsi préparé est ajouté à l'hydrolysat chargé en silice.

La composition de revêtement ainsi obtenue est appliquée (sans-vieillissement) sur un verre ORMA®, puis durcie, dans les conditions de l'exemple 1.

Les propriétés des verres revêtus sont les suivantes :

| | |
|---|---|
| BAYER | 2,3 |
| Laine d'acier | 1 |
| Ecart colorimétrique | + 32,2 |
| Aspect visuel | bon |
| Epaisseur | 4,2 µ |

**Exemple comparatif 1**

On prépare une composition conformément au mode opératoire de l'exemple 1 mais on utilise comme catalyseur 11,4 g d'acétylacétonate d'aluminium à la place de l'acétoxy diisopropoxyde d'aluminium de l'exemple 1.

Comme dans l'exemple 1, la composition est laissée vieillir 21 jours, puis appliquée sur une lentille ORMA® et durcie.

Des tests de coloration montrent que la lentille ainsi revêtue ne présente aucune coloration après traitement dans les bains usuels de coloration.

**Exemple comparatif 2**

On prépare une composition conformément au mode opératoire de l'exemple 2, mais on utilise comme catalyseur 10,8 g d'acétylacétonate d'aluminium à la place de l'acétoxydiisopropoxyde d'aluminium.

On appliqué ainsi la composition sans période de vieillissement, sur une lentille ORMA® et on fait durcir dans les mêmes conditions que l'exemple 2.

Les propriétés des verres revêtus sont les suivantes :

| | |
|---|---|
| BAYER | 3,5 |
| Laine d'acier | 0,5 |
| Epaisseur | 3,5 µ |
| Aspect visuel | bon. |

La lentille revêtue ne présente aucune coloration après traitement dans les bains usuels de coloration.

**Revendications**

1. Composition durcissable pour revêtement antiabrasion comprenant les constituants suivants :

   A) Un hydrolysat d'un époxysilane comportant de deux à trois groupements alkoxy directement reliés à l'atome de silicium,
   B) De la silice colloïdale,
   C) Un composé de l'aluminium,

   la dite composition renfermant au moins 1 % en poids d'eau, caractérisée en ce que le composé de l'aluminium est choisi parmi les composés correspondant à l'une des formules (I) ou (II)

(I) 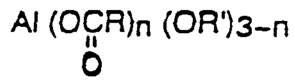

(II) $(R'0)_{3-n}\ Al\ (O\ SiR''_3)_n$

Dans lesquelles

R et R' sont des groupements alkyles à chaîne linéaire ou ramifiée de 1 à 10 atomes de carbone,
R" est un groupement alkyle à chaîne linéaire ou ramifiée de 1 à 10 atomes de carbone, un groupement phényle, un groupement

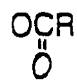

où R à la signification indiquée ci-dessus,
n est un nombre entier de 1 à 3.

2. Composition selon la revendication 1, caractérisée en ce que l'époxysilane a pour formule (III)

(III) 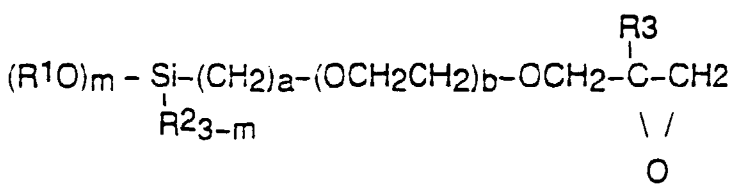

dans laquelle

$R^1$ est un groupement alkyle de 1 à 6 atomes de carbone, préférentiellement un groupe méthyle ou éthyle,

$R^2$ est un groupement alkyle de 1 à 6 atomes de carbone ou un groupement aryle,

$R^3$ est un groupement méthyle ou un atome d'hydrogène,
m représente 2 ou 3,
a est un nombre entier de 1 à 6,
b représente 0,1 ou 2.

3. Composition selon la revendication 1 ou 2, caractérisée en ce que l'époxysilane comporte trois groupements alkoxy directement reliés à l'atome de silicium.

**4.** Composition selon la revendication 3, caractérisée en ce que l'époxysilane est le $\gamma$-glycidoxypropyltriméthoxysilane.

**5.** Composition selon l'une quelconque des revendications précédentes, caractérisée en ce qu'elle comprend en outre D) un hydrolysat d'un alkoxysilane correspondant à la formule (IV)

$$\text{(IV)} \qquad R^6R^7Si\,(OR^4)\,(OR^5)$$

dans laquelle

$R^4$ et $R^5$ sont, indépendamment l'un de l'autre, des groupements alkyles à chaîne linéaire ou ramifiée, de 1 à 10 atomes de carbone
$R^6$ et $R^7$ sont choisis, indépendamment l'un de l'autre, parmi les groupements alkyles à chaîne linéaire ou ramifiée, possédant de 1 à 10 atomes de carbone et les groupements phényles.

**6.** Composition selon la revendication 5, caractérisée en ce que l'alkoxysilane correspondant à la formule (IV) est le diméthyldiéthoxysilane.

**7.** Composition selon l'une quelconque des revendications précédentes, caractérisée en ce que le constituant C est choisi parmi les composés de formules (I) et (II) définies dans la revendication 1 dans lesquelles R et R" sont des groupements méthyle et R' est un groupement isopropyle ou éthyle.

**8.** Composition selon l'une quelconque des revendications 5 à 7, caractérisée en ce qu'elle comprend les constituants A), B), C) et D) dans des proportions conduisant à un extrait sec théorique de la dite composition renfermant :

30 à 80 % en poids de matières solides provenant du constituant A
0 à 20 % en poids de matières solides provenant du constituant D
20 à 60 % en poids de matières solides provenant du constituant B
0,5 à 5 % en poids de constituant C.

**9.** Composition selon la revendication 8, caractérisée en ce que le dit extrait sec renferme :

40 à 50 % en poids de matières solides provenant du constituant A
5 à 15 % en poids de matières solides provenant du constituant D
35 à 50 % en poids de matières solides provenant du constituant B
1 à 2 % en poids de constituant C.

**10.** Procedé de préparation d'une composition pour revêtement antiabrasion selon l'une quelconque des revendications précédentes comportant une étape d'obtention d'un hydrolysat d'un époxysilane comportant de deux à trois groupes alkoxy directement reliés à l'atome de Silicium, puis l'ajout d'un constituant C tel que défini dans la revendication 1, caractérisé en ce que le constituant C est obtenu en faisant réagir un composé de formule (V) Al $(OR')_3$ avec

- soit un acide de formule

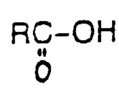 (VI)

- soit un composé de formule

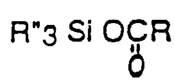 (VII)

dans lesquelles R, R' et R" ont les significations indiquées dans la revendication 1, les proportions molaires

de composés (VI) ou (VII) par rapport au composé (V) variant de 1 à 3.

**11.** Procédé selon la revendication 10, caractérisé en ce que la silice colloïdale est introduite dans l'hydrolysat d'époxysilane avant ajout du constituant C.

**12.** Article en matériau organique porteur d'un revêtement obtenu par durcissement d'une composition selon l'une quelconque des revendications 1 à 9.

**13.** Article revêtu selon la revendication 12, caractérisé en ce que ledit article est un polymère de di(allylcarbonate) de diéthylène glycol.

**14.** Article revêtu selon la revendication 12 ou 13, caractérisé en ce qu'il se présente sous la forme d'une lentille ophtalmique.

**Patentansprüche**

**1.** Härtbare Zusammensetzung für abriebfeste Beschichtung, enthaltend die folgenden Bestandteile:

A) ein Epoxysilanhydrolysat, enthaltend zwei bis drei direkt an das Siliziumatom gebundene Alkoxygruppen;
B) kolloidale Kieselerde,
C) eine Aluminiumverbindung,

wobei die genannte Zusammensetzung wenigstens 1 Gew.-% Wasser enthält, dadurch gekennzeichnet, daß die Aluminiumverbindung aus den Verbindungen gewählt ist, welche einer der Formeln (I) oder (II) entsprechen,

$$\text{(I)} \qquad Al(OC(=O)R)_n(OR')_{3-n}$$

$$\text{(II)} \qquad (R'O)_{3-n}Al(OSiR''_3)_n$$

in welchen R und R' geradkettige oder verzweigte Alkylgruppen mit 1 bis 10 Kohlenstoffatomen sind,

R" eine geradkettige oder verzweigte Alkylgruppe mit 1 bis 10 Kohlenstoffatomen, eine Phenylgruppe, eine

$$OC(=O)R\text{-Gruppe}$$

ist,
worin R die oben angegebene Bedeutung besitzt,
n eine ganze Zahl von 1 bis 3 ist.

**2.** Zusammensetzung nach Anspruch 1, dadurch gekennzeichnet, daß das Epoxysilan die Formel (III)

$$\text{(III)} \quad (R^1O)_m\text{-}Si(R^2_{3-m})\text{-}(CH_2)_a\text{-}(OCH_2CH_2)_b\text{-}OCH_2\text{-}C(R^3)(\text{-}O\text{-})CH_2$$

aufweist, in welcher

$R^1$ eine Alkylgruppe mit 1 bis 6 Kohlenstoffatomen, vorzugsweise eine Methyl- oder Ethylgruppe, ist,

$R^2$ eine Alkylgruppe mit 1 bis 6 Kohlenstoffatomen oder eine Arylgruppe ist,
$R^3$ eine Methylgruppe oder ein Wasserstoffatom ist,
m 2 oder 3 bedeutet,
a eine ganze Zahl von 1 bis 6 ist,
b 0, 1 oder 2 bedeutet.

**3.** Zusammensetzung nach Anspruch 1 oder 2, dadurch gekennzeichnet, daß das Epoxysilan drei Alkoxygruppen direkt an das Siliziumatom gebunden umfaßt.

**4.** Zusammensetzung nach Anspruch 3, dadurch gekennzeichnet, daß das Epoxysilan das γ-Glycidoxypropyltrimethoxysilan ist.

**5.** Zusammensetzung nach einem der vorhergehenden Ansprüche, dadurch gekennzeichnet, daß sie außerdem D) ein Alkoxysilanhydrolysat entsprechend der Formel (IV)

$$\text{(IV)} \qquad R^6R^7Si(OR^4)(OR^5)$$

enthält, in welcher

$R^4$ und $R^5$ unabhängig voneinander geradkettige oder verzweigte Alkylgruppen mit 1 bis 10 Kohlenstoffatomen sind,
$R^6$ und $R^7$ unabhängig voneinander aus den geradkettigen oder verzweigten Alkylgruppen, welche 1 bis 10 Kohlenstoffatome aufweisen, und den Phenylgruppen gewählt sind.

**6.** Zusammensetzung nach Anspruch 5, dadurch gekennzeichnet, daß das der Formel (IV) entsprechende Alkoxysilan Dimethyldiethoxysilan ist.

**7.** Zusammensetzung nach einem der vorhergehenden Ansprüche, dadurch gekennzeichnet, daß der Bestandteil C aus den Verbindungen der Formeln (I) und (II), welche in Anspruch 1 definiert sind, gewählt ist, in welchen R und R" Methylgruppen sind und R' eine Isopropyl- oder Ethylgruppe ist.

**8.** Zusammensetzung nach einem der Ansprüche 5 bis 7, dadurch gekennzeichnet, daß sie die Bestandteile A), B), C) und D) in Verhältnissen enthält, welche zu einem theoretischen Trockenextrakt der genannten Zusammensetzung führt, enthaltend:

30 bis 80 Gew.-% Feststoffe, welche von Bestandteil A herrühren,
0 bis 20 Gew.-% Feststoffe, welche von Bestandteil D herrühren,
20 bis 60 Gew.-% Feststoffe, welche von Bestandteil B herrühren,
0,5 bis 5 Gew.-% des Bestandteils C.

**9.** Zusammensetzung nach Anspruch 8, dadurch gekennzeichnet, daß das Trockenextrakt umfaßt:

40 bis 50 Gew.-% Feststoffe, welche von Bestandteil A herrühren,
5 bis 15 Gew.-% Feststoffe, welche von Bestandteil D herrühren,
35 bis 50 Gew.-% Feststoffe, welche von Bestandteil B herrühren,
1 bis 2 Gew.-% des Bestandteils C.

**10.** Verfahren zur Herstellung einer Zusammensetzung für abriebfeste Beschichtung nach einem der vorhergehenden Ansprüche, umfassend einen Schritt des Erhalts eines Epoxysilanhydrolysats, umfassend 2 bis 3 direkt an das siliziumatom gebundene Alkoxygruppen, wonach man einen Bestandteil C, wie er in Anspruch 1 definiert ist, zufügt, dadurch gekennzeichnet, daß der Bestandteil C erhalten wird, indem man eine Zusammensetzung der Formel (V) $Al(OR')_3$ mit

- entweder einer Säure der Formel

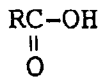 (VI)

- oder einer Verbindung der Formel

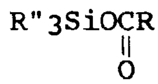 (VII)

in welchen R, R' und R" die in Anspruch 1 angegebenen Bedeutungen besitzen, wobei die Molverhältnisse der Verbindungen (VI) oder (VII) in bezug auf die Verbindung (V) zwischen 1 und 3 variieren, reagieren läßt.

**11.** Verfahren nach Anspruch 10, dadurch gekennzeichnet, daß die kolloidale Kieselerde in das Epoxysilanhydrolysat vor dem Zufügen des Bestandteils C eingebracht wird.

**12.** Gegenstand aus organischem Material, welcher eine Beschichtung, welche durch Härten einer Zusammensetzung nach einem der Ansprüche 1 bis 9 erhalten wurde, trägt.

**13.** Beschichteter Gegenstand nach Anspruch 12, dadurch gekennzeichnet, daß der Gegenstand ein Di(allylcarbonat) polymer von Diethylenglykol ist.

**14.** Beschichteter Gegenstand nach Anspruch 12 oder 13, dadurch gekennzeichnet, daß er in Form einer ophtalmischen Linse vorliegt.

## Claims

**1.** A hardenable composition for an abrasion resistant coating comprising the following constituents:

A - an epoxysilane hydrolysate containing 2 to 3 alkoxy groups directly bonded to the silicon atom,
B - colloidal silica,
C - an aluminium compound,

said composition containing at least 1% by weight of water, characterised in that the aluminium compound is selected from the compounds corresponding to formula (I) or (II):

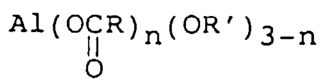 (I)

$$(R'O)_{3-n}Al(OSiR''_3)_n \quad (II)$$

wherein:

R and R' are linear or branched alkyl groups with 1 to 10 carbon atoms,
R" is a linear or branched alkyl group with 1 to 10 carbon atoms, a phenyl group, a

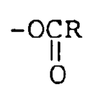

group where R has the meaning given above,

and n is a whole number from 1 to 3.

**2.** Composition according to claim 1 characterised in that the epoxysilane has the following formula (III):

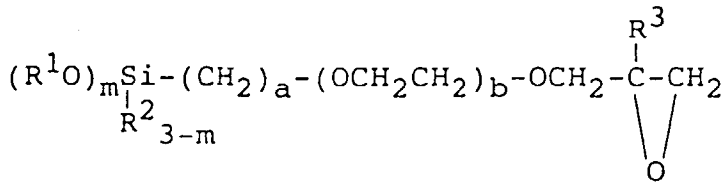 (III)

wherein

$R^1$ is an alkyl group with 1 to 6 carbon atoms, preferably a methyl or ethyl group,
$R^2$ is an alkyl group with 1 to 6 carbon atoms or an aryl group,
$R^3$ is a methyl group or a hydrogen atom,
m is 2 or 3,
a is a whole number from 1 to 6,
b is 0, 1 or 2.

**3.** Composition according to claim 1 or claim 2 characterised in that the epoxysilane contains three alkoxy groups directly bonded to the silicon atom.

**4.** Composition according to claim 3 characterised in that the epoxysilane is γ-glycidoxypropyltrimethoxysilane.

**5.** Composition according to any one of the preceding claims characterised in that it further comprises D) an alkoxysilane hydrolysate having formula (IV):

$$R^6R^7Si(OR^4)(OR^5) \quad (IV)$$

wherein

$R^4$ and $R^5$ are independent of each other and represent linear or branched alkyl groups with 1 to 10 carbon atoms,
$R^6$ and $R^7$ are independently selected from linear or branched alkyl groups with 1 to 10 carbon atoms and phenyl groups.

**6.** Composition according to claim 5 characterised in that the alkoxysilane having formula (IV) is dimethyldiethoxysilane.

**7.** Composition according to any one of the preceding claims characterised in that constituent C is selected from compounds with formula (I) or (II) as defined in claim 1 wherein R and R" are methyl groups and R' is an isopropyl or ethyl group.

**8.** Composition according to any one of claims 5 to 7 characterised in that the proportions of constituents A), B), C) and D) are selected to produce a theoretical dry content in said composition of:

30% to 80% by weight of solid material from constituent A,
0% to 20% by weight of solid material from constituent D,
20% to 60% by weight of solid material from constituent B,
0.5% to 5% of constituent C.

**9.** Composition according to claim 8 characterised in that said dry content comprises:

40% to 50% by weight of solid material from constituent A,

5% to 15% by weight of solid material from constituent D,
35% to 50% by weight of solid material from constituent B and
1% to 2% by weight of constituent C.

**10.** Process for the preparation of an abrasion resistant coating composition in accordance with any one of the preceding claims including a step for the production of an epoxysilane hydrolysate including two to three alkoxy groups directly bonded to the silicon atom followed by addition of a constituent C as defined in claim 1 characterised in that constituent C is obtained by reacting a compound having formula (V) $Al(OR')_3$ with

- either an acid having formula

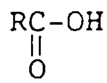
(VI)

- or a compound having formula

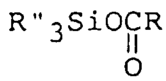
(VII)

where R, R' and R" have the meanings given in claim 1, the molar proportions of compounds (VI) or (VII) with respect to compound (V) varying between 1 and 3.

**11.** Process according to claim 10 characterised in that the colloidal silica is introduced into the epoxysilane hydrolysate before addition of constituent C.

**12.** Organic material article having a coating obtained by hardening a composition in accordance with any one of claims 1 to 9.

**13.** Coated article according to claim 12 characterised in that said article is a diethylene glycol di(allylcarbonate) polymer.

**14.** Coated article according to claim 12 or claim 13 characterised in that it is in the form of an ophthalmic lens.